# EUROPÄISCHE PATENTSCHRIFT

(11) **EP 0 683 699 B1**
(45) Veröffentlichungstag und Bekanntmachung des Hinweises auf die Patenterteilung: **06.08.1997**
(21) Anmeldenummer: 94907524.6
(22) Anmeldetag: 09.02.1994
(51) Int. Cl.: B05C 3/09

(54) **VORRICHTUNG ZUR OBERFLÄCHENBEHANDLUNG VON FAHRZEUGKAROSSERIEN**
CAR BODY SURFACE TREATMENT DEVICE
DISPOSITIF DE TRAITEMENT DE LA SURFACE DE CARROSSERIES DE VEHICULES

(30) Priorität: 11.02.1993 DE 4304145
(43) Veröffentlichungstag der Anmeldung: 29.11.1995
(73) Patentinhaber: ABB FLÄKT AB, S-131 34 Nacka (SE)
(72) Erfinder: HECKMANN, Norbert, D-34326 Morschen (DE)
(74) Vertreter: Füchsle, Klaus, Dipl.-Ing.
(86) Internationale Anmeldenummer: EP9400369
(87) Internationale Veröffentlichungsnummer: WO9417926

(56) Entgegenhaltungen:
- EP-A- 0 118 756
- DE-A- 2 146 851
- GB-A- 2 229 381
- PATENT ABSTRACTS OF JAPAN vol. 15, no. 509 (M-1195) 24. Dezember 1991 & JP,A,03 223 022 (NAKANISHI KINZOKU KOGYO K.K.) 2. Oktober 1991

## Beschreibung

Die Erfindung betrifft eine Vorrichtung zur Oberflächenbehandlung einer oder mehrerer Fahrzeugkarosserien nach dem Oberbegriff des Patentanspruchs 1.

Eine Vorrichtung zur Oberflächenbehandlung von Fahrzeugkarosserien, welche durch Drehung um 180° in ein Behandlungsbad eingetaucht bzw. durch Gegendrehung aus diesem herausgeführt werden, ist aus der GB 2 229 381 bekannt. Bei dieser wird eine Fahrzeugkarosserie mit einer Art Ladepalette fest verbunden. Diese Einheit aus Ladepalette mit darauf angebrachter Fahrzeugkarosserie wird auf einen Rollschlitten aufgesetzt. Dieser Rollschlitten ist mit nicht angetriebenen Rollen ausgestattet, die eine Verschiebung seitlich zur Fahrzeugkarosserie-Längsachse ermöglichen. Mit Hilfe eines solchen, nicht angetriebenen Rollschlittens wird die Ladepalette mit der Fahrzeugkarosserie vom Behandlungsbad zu weiteren Bearbeitungsstationen transportiert.

Der gesamte Verbund, bestehend aus Fahrzeugkarosserie, Ladepalette sowie Rollschlitten, wird auf eine Halterung geschoben, die über jedem Behandlungsbad angebracht ist. Diese Halterung besitzt eine Drehachse senkrecht zur Fahrzeugkarosserie-Längsachse bzw. parallel zur Transportrichtung. Durch Drehung um diese Drehachse um 180° kann nun der gesamte Verbund von Fahrzeugkarosserie, Ladepalette und Rollschlitten in das Behandlungsbad eingetaucht werden. Während dieses Eintauchvorgangs sind die besagte Halterung und die Einheit aus Fahrzeugkarosserie, Ladepalette und Rollschlitten durch Verschlußbolzen miteinander verbunden.

Zum Transport der Fahrzeugkarosserien bzw. der Rollschlitten dient ein Förderband, das sich über mehrere Behandlungsstationen mit zugehörigen Behandlungsbecken erstreckt. Diese Behandlungsstationen liegen seitlich nebeneinander und das Förderband transportiert die Rollschlitten, auf denen jeweils eine Ladepallette mit der Fahrzeugkarosserle aufgesetzt ist, von Behandlungsbecken zu Behandlungsbecken. An dem Förderband sind hierfür senkrecht stehende Plattenstücke montiert, die an dem Rollschlitten anliegen. Diese Art der Vorrichtung zum Einbringen einer Fahrzeugkarosserie hat den Vorteil, daß mit einem einfachen Mechanismus das Aufschwappen der Behandlungsflüssigkeit im Behandlungsbad minimiert wird, dadurch, daß die Fahrzeugkarosserie über die Front- oder Heckseite in das Behandlungsbad eingedreht wird. Die in der Fahrzeugkarosserie eingeschlossene Luftmenge kann bei dem Eindrehvorgang kontinuierlich aus den Fenstern der Fahrzeugkarosserie entweichen.

Der Aufbau dieser Vorrichtung ist relativ kompliziert und nur für sehr kleine Anlagen geeignet. Wenn eine Fahrzeugkarosserie eingetaucht ist, muß die nächste Karosserie solange warten, bis die Prozeßzeit der ersten Karosserie abgelaufen ist. Diese Prozeßzeit beträgt bei Vorbehandlung bei einzelnen Prozeßstufen bis zu drei Minuten und bei kathodischer Tauchlackierung noch länger.

Unter Berücksichtigung der vorstehend aufgezeigten Probleme liegt der Erfindung die Aufgabe zugrunde, eine einfachere Vorrichtung zu schaffen, die mittels Drehen mindestens eine Fahrzeugkarosserie in ein Behandlungsbad eintaucht und die es bei eingetauchter Fahrzeugkarosserie ermöglicht, daß eine weitere Fahrzeugkarosserie auf diese Drehvorrichtung aufgeschoben und lösbar verbunden wird.

Diese Aufgabe wird durch eine Vorrichtung mit den Merkmalen des Anspruchs 1 gelöst.

Ein Ladeschlitten dient danach zur Aufnahme und Fixierung der Fahrzeugkarosserie. Ladeschlitten und Fahrzeugkarosserie werden während der gesamten Dauer der Behandlung in einer Gesamtvorrichtung, welche durch Aneinanderreihung mehrerer solcher Stationen mit Behandlungsbad gebildet wird, nicht voneinander getrennt. Der Ladeschlitten mit der Fahrzeugkarosserie wird mittels einer oder mehreren angetriebenen Laufrollen auf eine Drehvorrichtung aufgeschoben und dort mittels Fixiervorrichtungen lösbar mit dieser verbunden. Die Drehvorrichtung ist über dem Behandlungsbad angebracht und umfaßt eine Drehachse quer zur Transportrichtung der Fahrzeugkarosserien. Das Einbringen der Fahrzeugkarosserie erfolgt nun durch Drehen der Drehvorrichtung derart, daß die Fahrzeugkarosserie über deren Frontseite oder Heckseite in das Behandlungsbad eingetaucht wird. Da für jede Fahrzeugkarosserie nur die kostengünstigen Ladeschlitten benötigt werden, wird eine Kostenreduzierung erreicht. Es ist bei der der Erfindung zugrundeliegenden Vorrichtung auch keine Umsetzungszone für die Ladepaletten mehr notwendig, da diese vollständig wegfallen. Zum Weitertransport der Ladeschlitten mit den Fahrzeugkarosserien sind jeweils eine oder mehrere der Laufrollen auf Ober- und Unterseite der Drehvorrichtung angetrieben. Somit ist ein unabhängiger Transport der einzelnen Ladeschlitten möglich.

Des weiteren ermöglicht der einfache Aufbau der Vorrichtung eine Erhöhung der Taktrate zum Einbringen der Fahrzeugkarosserie in das Behandlungsbad dadurch, daß bei eingetauchter Fahrzeugkarosserie eine neue Fahrzeugkarosserie mit Ladeschlitten über das Behandlungsbad hinweggeführt werden kann. Eine alternative Ausführung mit Fixiervorrichtungen auf Ober- und Unterseite würde es ermöglichen, daß bei eingetaucher Fahrzeugkarosserie eine weitere aufgeschoben und fixiert werden kann. Durch Drehung werden dann die eingetauchte und die nun neue, noch unbehandelte, Fahrzeugkarosserie ausgetauscht.

Die Kapazität der gesamten Anlage ist nur noch durch die Eintauchzeit und nicht mehr durch die Prozeßzeit beschränkt und erlaubt somit auch länger andauernde Behandlungen, wie z.B. kathodische Tauchlackierung.

Die Anwendung der bekannten Ladeschlittentechnik ermöglicht die erforderliche Kombination der Spritz- und Tauchprozesse, sowohl bei der Vorbehandlung als auch bei der Tauchlackierung der Fahrzeugkarosserien.

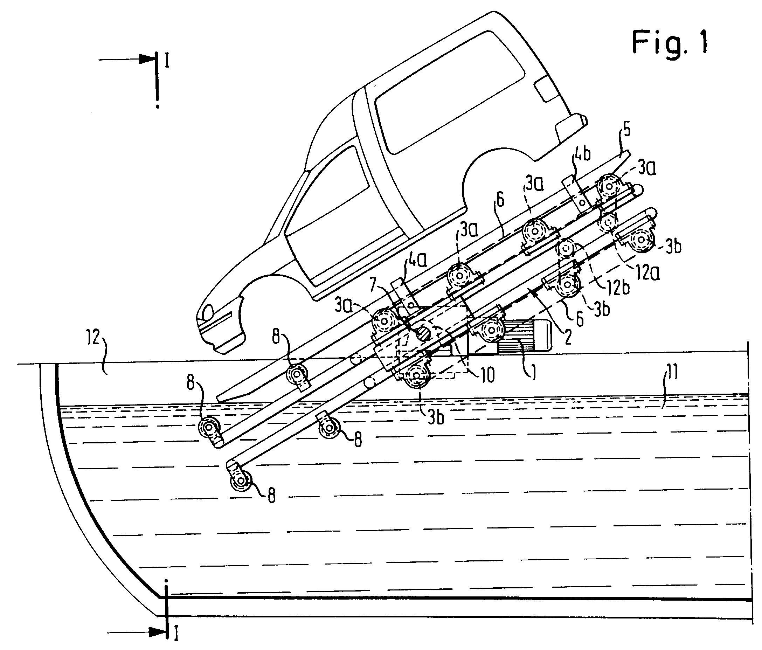

Die Erfindung ist in den Zeichnungen beispielhaft dargestellt und wird nachfolgend näher erläutert. Es zeigen
- Fig. 1: Längsschnitt eines Behandlungsbeckens mit erfindungsgemäßer Drehvorrichtung und

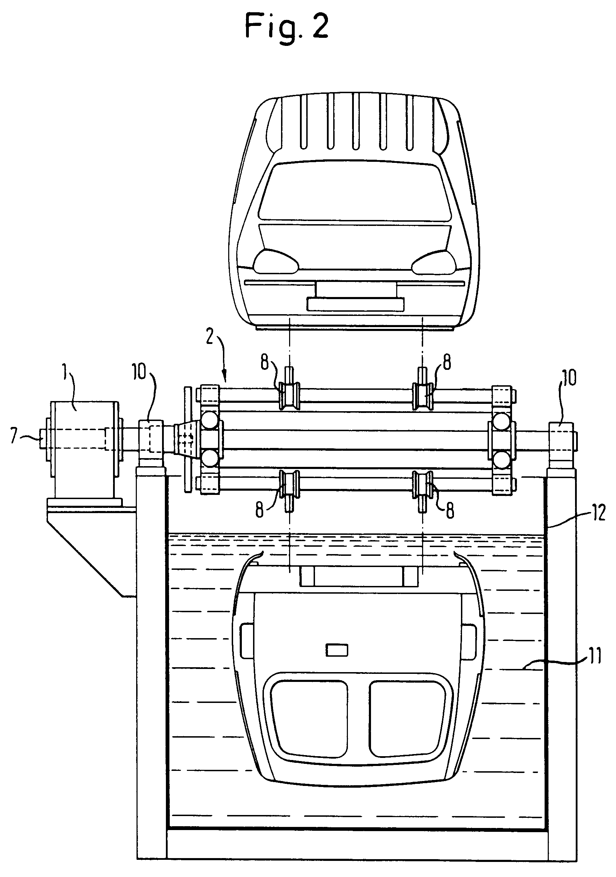

- Fig. 2: Querschnitt längs der Linie I-I der Fig. 1.

Bei der erfindungsgemäßen Vorrichtung ist über dem Behandlungsbecken eine erfindungsgemäße Drehvorrichtung 2 angebracht. Dabei wird die Drehvorrichtung 2 auf den Enden einer Drehachse 7 rechts und links mit Lagerböcken 10 auf der Behälterwand 12 abgestützt. An einem Ende der Drehachse 7 ist ein Antrieb 1 angeflanscht, der es ermöglicht, über ein Getriebe die Drehachse 7 in Drehung zu versetzen. Auf der Ober- und Unterseite der Drehvorrichtung 2 ist jeweils eine Aufnahmevorrichtung, bestehend aus einer Anzahl Führungslaufrollen 8, einer Fixiervorrichtung 4a, 4b (nur Oberseite), und einigen Laufrollen 3a, 3b, angebracht. Die Führungsrollen 8 und die Laufrollen 3a, 3b sind felgenartig ausgebildet, so daß die Längsträger des Ladeschlittens 5 durch sie geführt werden. Sie dienen der seitlichen Führung der Ladeschlitten 5 beim Transport. Die Anzahl Laufrollen 3a, 3b und die Führungsrollen 8 sind in gleichmäßigen Abständen auf der Ober- und Unterseite verteilt. Diese Rollen 3a, 3b, 8 sind drehbar gelagert, so daß in Transportrichtung ein Ladeschlitten 5 aufgeschoben bzw. von der Drehvorrichtung 2 wegtransportiert werden kann. Hierzu sind die Laufrollen 3a, 3b mittels einem Förderband 6 verbunden, wobei jeweils eine der Laufrollen 3a, 3b durch einen Rollenantrieb 12a, 12b, z.B. einem Elektrogetriebemotor, angetrieben ist. Die Rollen 3a, 3b, 8 einer Aufnahmevorrichtung bilden zusammen eine Auflage für einen Ladeschlitten 5. Zur lösbaren Verbindung von Drehvorrichtung 2 und Ladeschlitten 5 sind auf der Oberseite seitlich an der Drehvorrichtung 2 Fixiervorrichtungen 4a, 4b aufgesetzt.

Im folgenden wird die Arbeitsweise dieser Ausführungsform erläutert. Vor Beginn der Oberflächenbehandlung bzw. der Behandlung der Fahrzeugkarosserie im Verbund von mehreren Behandlungsstationen wird die Fahrzeugkarosserie mit einem Ladeschlitten 5 fest verbunden. Der Ladeschlitten 5 wird dann über Führungslaufrollen 8 und mit Hilfe der Laufrollen 3a auf die Drehvorrichtung 2 transportiert. Hierbei wird die Ladeschlitten 5 durch die Seitenführung der Rollen 3a und 8, welche an der Drehvorrichtung 2 angebracht sind, geführt. Ist der Ladeschlitten 5 in der richtigen Position auf der Drehvorrichtung 2, so wird der Rollenantrieb 12a der Laufrollen 3a gestoppt und der Ladeschlitten 5 mit der Drehvorrichtung 2 durch die Fixiervorrichtungen 4a, 4b miteinander fest verbunden. Dies geschieht durch Einklemmen oder durch Bolzen der Fixiervorrichtungen 4a, 4b, welche im Ladeschlitten 5 eingreifen. Dann wird die gesamte Drehvorrichtung 2 um 180° gedreht. Beim Drehvorgang taucht die Drehvorrichtung 2 mit dem Ladeschlitten 5 sowie der Fahrzeugkarosserie über die Front- oder Heckseite in das Behandlungsbad 11 ein. Nach Beendigung des Drehvorgangs ist die Fahrzeugkarosserie nun vollständig im Behandlungsbad eingetaucht. Durch die Drehung um 180° sind die bisherigen Ober- und Unterseiten miteinander vertauscht worden. Die jetzige Unterseite ist nun folgend Oberseite genannt. Die Oberseite der Drehvorrichtung 2 ist auch mit einer oder mehreren Aufnahmevorrichtungen versehen, die es nun ermöglicht, während eine Fahrzeugkarosserie eingetaucht ist, einen neuen Ladeschlitten 5 mit einer weiteren Fahrzeugkarosserie darüber hinwegzuführen.

Bei einem weiteren Ausführungsbeispiel (nicht gezeigt) ist nicht nur die Oberseite, sondern auch die Unterseite mit einer Fixiervorrichtung 4a, 4b versehen. Bei eingetauchter Fahrzeugkarosserie ist dann auf der jetzigen Oberseite eine Fixierung eines weiteren Ladeschlittens 5 möglich. Durch Drehung um weitere 180° oder durch Zurückdrehen um 180° wird die neu aufgesetzte Fahrzeugkarosserie in das Behandlungsbad 11 eingetaucht und gleichzeitig die behandelte Fahrzeugkarosserie aus diesem herausgeführt.

Auch bei dieser Ausführungsform ist es natürlich möglich, mehrere Aufnahmevorrichtungen auf Ober- und Unterseite anzubringen.

## Patentansprüche

1. Vorrichtung zur Oberflächenbehandlung einer oder mehrerer Fahrzeugkarosserien mit einer Drehvorrichtung, an die mindestens eine Fahrzeugkarosserie befestigbar ist und die durch Drehung um 180° die Fahrzeugkarosserie in ein Behandlungsbad eintaucht und sie durch eine weitere Drehung aus diesem herausführt,
dadurch **gekennzeichnet,** daß
- die Drehachse (7) der Drehvorrichtung (2) senkrecht zur Transportrichtung der Fahrzeugkarosserie angeordnet ist, und
- jeweils eine oder mehrere Aufnahmevorrichtungen zur jeweiligen Aufnahme eines mit der Fahrzeugkarosserie lösbar verbundenen Ladeschlittens (5) auf der Ober- und der Unterseite der Drehvorrichtung (2) angebracht sind, wobei jeder Ladeschlitten (5) mit der Drehvorrichtung (2) verbindbar ist.

2. Vorrichtung nach Anspruch 1, dadurch gekennzeichnet, daß die jeweiligen Aufnahmevorrichtungen aus einer Anzahl von Führungslaufrollen (8) und einer Anzahl von Laufrollen (3a, 3b) zur Führung und Bewegung des Ladeschlittens (5) und einer oder mehreren Fixiervorrichtungen (4a, 4b) zum Verbinden von Ladeschlitten (5) und Drehvorrichtung (2) besteht.

3. Vorrichtung nach Anspruch 2, dadurch gekennzeichnet, daß zumindestens eine, vorzugsweise zwei, der Laufrollen (3a und 3b) einer Aufnahmevorrichtung durch einen Rollenantrieb (12a, 12b) angetrieben ist.

4. Vorrichtung nach Anspruch 3, dadurch gekennzeichnet, daß mehrere der Laufrollen (3a, 3b) einer Aufnahmevorrichtung mittels eines Förderbandes verbunden sind.

## Claims

1. Device for the surface treatment of one or more vehicle bodies with a rotary device to which at least one vehicle body can be fastened and which on rotating through 180° immerses the vehicle body in a treatment bath and removes it from the latter by a further rotation,
characterised in that
- the swivel axis (7) of the rotary device (2) is arranged at right angles to the transport direction of the vehicle body, and
- in each case one or more receiving devices for the reception in each case of a loading carriage (5) connected in detachable manner to the vehicle body are fitted on the upper and the lower side of the rotary device (2), wherein each loading carriage (5) can be connected to the rotary device (2).

2. Device according to Claim 1, characterised in that the receiving devices in question consist of a number of guide rollers (8) and a number of track rollers (3a, 3b) for guiding and moving the loading carriage (5) and one or more fixing devices (4a, 4b) for connecting the loading carriages (5) and the rotary device (2).

3. Device according to Claim 2, characterised in that at least one, preferably two, of the track rollers (3a and 3b) of a receiving device is driven by a roller drive (12a, 12b).

4. Device according to Claim 3, characterised in that several of the track rollers (3a, 3b) of a receiving device are connected by means of a conveyor belt.

## Revendications

1. Dispositif de traitement d'une ou plusieurs carrosseries de véhicules avec un dispositif rotatif, auquel est susceptible d'être fixée au moins une carrosserie de véhicule et qui fait plonger, par une rotation de 180°, la carrosserie de véhicule dans un bain de traitement et la ressort de façon guidée, en opérant une autre rotation,
caractérisé en ce que,
- l'axe de rotation (7) du dispositif rotatif (2) est disposé perpendiculairement par rapport à la direction de transport de la carrosserie de véhicule, et
- un ou plusieurs dispositifs supports, destiné(s) à recevoir respectivement un chariot de chargement (5) relié de façon désolidarisable à la carrosserie du véhicule, étant monté(s) sur la face supérieure et la face inférieure du dispositif rotatif (2), chaque chariot de chargement (5) étant susceptible d'être relié au dispositif rotatif (2).

2. Dispositif selon la revendication 1, caractérisé en ce que les dispositifs supports respectifs sont constitués d'une pluralité de galets de guidage (8) et d'une pluralité de galets de roulement (3a, 3b) destinés à assurer le guidage et le déplacement du chariot de chargement (5) et d'un ou plusieurs dispositifs de fixation (4 à 4b), destinés à assurer la liaison entre le chariot de chargement (5) et le dispositif rotatif (2).

3. Dispositif selon la revendication 2 caractérisé en ce qu'au moins un, de préférence deux, des galets de roulement (3a et 3b) d'un dispositif support sont entraînés par un entraînement de galets (12a, 12b).

4. Dispositif selon la revendication 3, caractérisé en ce que plusieurs des galets de roulement (3a, 3b) d'un dispositif support sont reliés au moyen d'une bande transporteuse.
